# EUROPEAN PATENT APPLICATION

(11) **EP 4 084 360 A1**
(43) Date of publication of application: **02.11.2022**
(21) Application number: 22170942.1
(22) Date of filing: 29.04.2022
(51) Int. Cl.: H04B 7/155

(54) **REPEATER SYSTEM CONFIGURED TO ADJUST SETTINGS BASED ON USER EQUIPMENT COMMUNICATION METRICS**

(30) Priority: 01.05.2021 US 202163182887 P
(71) Applicant: Wilson Electronics, LLC, St. George, UT 84790 (US)
(72) Inventor: ASHWORTH, Christopher, Toquerville, 84774 (US); NORDGRAN, Casey, Ivins, 84738 (US); GIOVANINI, Rick, St. George, 84790 (US); COOK, Patrick, Cedar City, 84720 (US); JUDD, Samuel, St. George, 84770 (US)
(74) Representative: ip21 Ltd

(57) **Abstract**

A technology is described for a repeater system operable to adjust repeater system settings based on user equipment (UE) connectivity metrics in a cellular communication system. The repeater system includes first direction amplification and filtering paths and second direction amplification and filtering paths and a wireless network transceiver all coupled to a controller. Cellular network connectivity metrics (metrics) can be measured or received at the UE. The metrics are used to perform operational adjustments at the repeater system for the UE to improve the performance of the UE.

## Description

### RELATED APPLICATIONS

The present application claims the benefit of U.S. Provisional Patent Application No. 63/182,887, filed May 1, 2021 with a docket number of 3969-193.PROV, the entire specification of which is hereby incorporated by reference in its entirety for all purposes.

### BACKGROUND

Repeaters can be used to increase the quality of wireless communication between a wireless device and a wireless communication access point, such as a cell tower. Repeaters can increase the quality of the wireless communication by amplifying, filtering, and/or applying other processing techniques to uplink and downlink signals communicated between the wireless device and the wireless communication access point.

As an example, the repeater can receive, via an antenna, downlink signals from the wireless communication access point. The repeater can amplify the downlink signal and then provide an amplified downlink signal to the wireless device. In other words, the repeater can act as a relay between the wireless device and the wireless communication access point. As a result, the wireless device can receive a stronger signal from the wireless communication access point. Similarly, uplink signals from the wireless device (e.g., telephone calls and other data) can be received at the repeater. The repeater can amplify the uplink signals before communicating, via an antenna, the uplink signals to the wireless communication access point.

### BRIEF DESCRIPTION OF THE DRAWINGS

Features and advantages of the disclosure will be apparent from the detailed description which follows, taken in conjunction with the accompanying drawings, which together illustrate, by way of example, features of the disclosure; and, wherein:
FIG. 1a illustrates a cellular communication system in accordance with an example;
FIG. 1b illustrates a repeater in communication with a wireless device and a base station in accordance with an example;
FIG. 2 illustrates a repeater having a first direction amplification and filtering path and a second direction amplification and filtering path in accordance with an example;
FIG. 3 illustrates a multiband repeater in accordance with an example;
FIG. 4 illustrates a repeater system operable to adjust repeater system settings based on user equipment (UE) connectivity metrics in a cellular communication system in accordance with an example;
FIG. 5 illustrates a repositionable donor antenna in accordance with an example;
FIG. 6 is a flow diagram illustrating an example method for adjusting repeater system settings based on UE connectivity metrics in a cellular communication system in accordance with an example; and
FIG. 7 illustrates a wireless device in accordance with an example.

Reference will now be made to the exemplary embodiments illustrated, and specific language will be used herein to describe the same. It will nevertheless be understood that no limitation of the scope of the invention is thereby intended.

### DETAILED DESCRIPTION

Before the present invention is disclosed and described, it is to be understood that this invention is not limited to the particular structures, process steps, or materials disclosed herein, but is extended to equivalents thereof as would be recognized by those ordinarily skilled in the relevant arts. It should also be understood that terminology employed herein is used for the purpose of describing particular examples only and is not intended to be limiting. The same reference numerals in different drawings represent the same element. Numbers provided in flow charts and processes are provided for clarity in illustrating steps and operations and do not necessarily indicate a particular order or sequence.

### EXAMPLE EMBODIMENTS

An initial overview of technology embodiments is provided below and then specific technology embodiments are described in further detail later. This initial summary is intended to aid readers in understanding the technology more quickly but is not intended to identify key features or essential features of the technology nor is it intended to limit the scope of the claimed subject matter.

Repeaters can increase the quality of wireless communication between a wireless device and a wireless communication access point by amplifying, filtering, or applying other processing techniques to uplink and downlink signals communicated between the wireless device and the wireless communication access point.

Cellular communication standards have become more complex with each additional generation. As the use of wireless handsets have become more popular, government entities have provided significantly more bandwidth. The bandwidth is typically provided in selected frequency bands. The Third Generation Partnership Project (3GPP) standard now lists over 255 different bands that can be used at locations around the world.

Cellular repeaters are following the trend of the cellular communications standards. The repeaters are also more complex in order to provide the desired amplification and filtering for the different bands. However, the increased complexity can increase the cost and power of a repeater. New repeater designs and architectures are needed to provide relatively low cost repeaters for consumers that can provide the amplification and filtering of the bands often used by consumers.

Cellular communications systems are typically configured to provide a broad array of digital signal measurements for uplink and downlink signals measured between the user equipment (UE) and the base station. The signals are disassembled, using complex and expensive modems, down to the constituent frames, subframes, bytes, and bits. These measurements are continuously communicated between the UEs and the base stations with which they UEs are in communication. Signals are measured to determine timing, delay, noise, amplitude, and signal quality, to name a few.

In contrast, cellular repeaters typically perform very few measurements of the cellular signals. Cellular repeaters often do not include the use of a cellular modem. Cellular modems are expensive, use monthly operating contracts, and are designed to only send and receive signals for a specific carrier. To reduce costs, cellular repeaters are typically configured to receive all cellular signals in selected bands, irrespective of the carrier. So it is often not possible to measure signals at a repeater with the same granularity of a cellular communication system.

Despite the dozens of different types of signal measurements performed in a cellular communications system, the systems are not configured to know when a cellular repeater is used to filter and amplify a cellular signal. Cellular communications systems are configured to setup, schedule, transmit, and receive cellular data in a manner that is best for the system as a whole. Accordingly, when data is to be sent from a base station to a UE, the cellular communication system selects channels in one or more bands, with a bandwidth and timing that work best for the cellular system. Channels and bands may be selected based on the amount of data to be transmitted, the distance over which the data is to be transmitted, the current load on the cellular system by other UEs, and the numerous measurements performed between the base station and the UE.

The choices and assumptions made by a cellular communications system in transmitting and receiving cellular communications signals often work against a repeater. Because a cellular repeater is configured to reduce noise and increase power, the cellular communications system assumes that signals can be transmitted with lower power and using modulation and coding schemes that are not conducive to communication over relatively long distances. Better communication between the repeater and aspects of the cellular communication system can enable the repeater to work with the cellular communication system. This can enable signals to be transmitted with higher power, and lower noise, thereby enabling higher data throughput and lower battery usage at the UE.

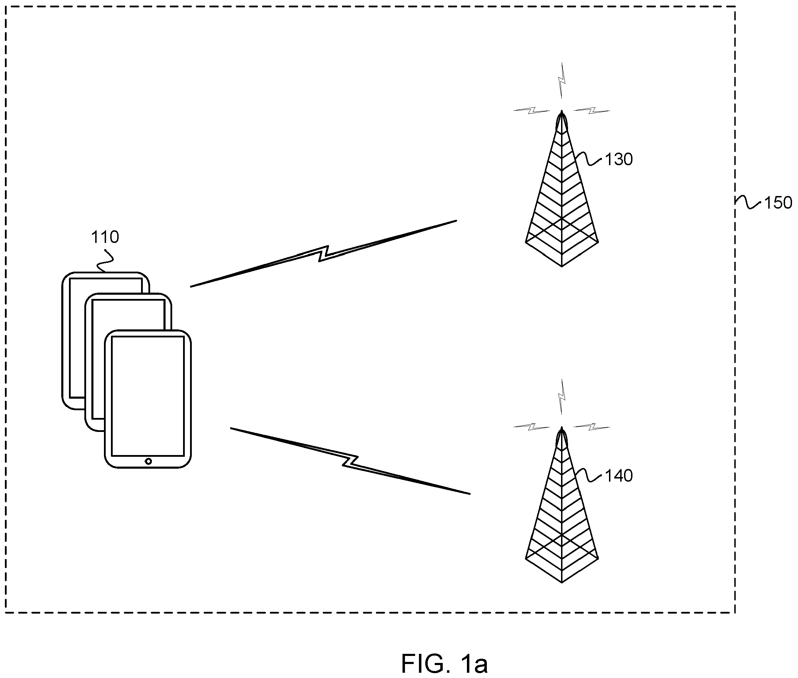

FIG. 1a illustrates a cellular communication system 150 that comprises multiple user equipment (UEs) 110 that are in wireless communication with one or more base stations 130, 140. The communication range between the UEs 110 and base stations 130, 140 is limited based on distance between the UEs 110 and base stations 130, 140, government limitations on transmission power, interference, and other considerations. While two base stations are illustrated in this example, it is not intended to be limiting. A cellular communication system can include hundreds, or thousands of different base stations. Different types of base stations can also be used, including traditional high power base stations designed to cover a broad range of up to kilometers of area, down to relatively low power base stations designed to be at a user's operating location and communicate hundreds of feet. The cellular communication system 150 can have wired or wireless connections with each of the base stations 130, 140. The cellular communication system 150 can include additional cellular communications equipment that can be used to process cellular signals and provide information and instructions to the base stations 130, 140 and/or UEs 110 for communication within the cellular communication system 150.

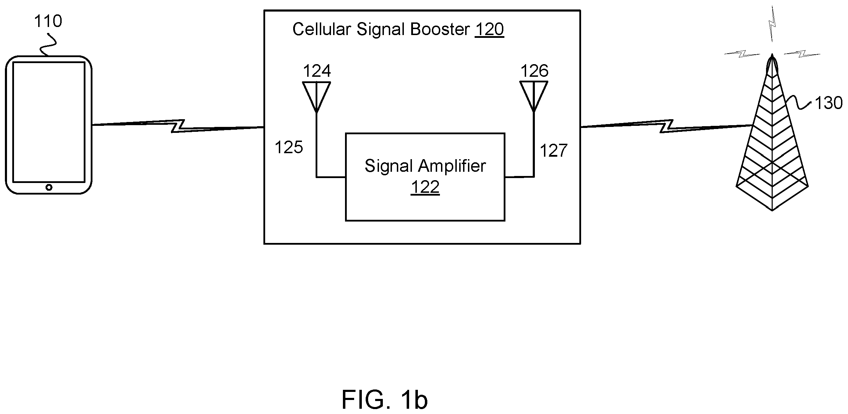

FIG. 1b illustrates an exemplary repeater 120 in communication with a wireless device 110 and a base station 130. The repeater 120 can be referred to as a signal booster. A repeater can be an electronic device used to amplify (or boost) signals. The repeater 120 (also referred to as a cellular signal amplifier) can improve the quality of wireless communication by amplifying, filtering, and/or applying other processing techniques via a signal amplifier 122 to uplink signals communicated from the wireless device 110 to the base station 130 and/or downlink signals communicated from the base station 130 to the wireless device 110. In other words, the repeater 120 can amplify or boost uplink signals and/or downlink signals bi-directionally. In one example, the repeater 120 can be at a fixed location, such as in a home or office. Alternatively, the repeater 120 can be attached to a mobile object, such as a vehicle or a wireless device 110.

In one configuration, the repeater 120 can include a server antenna 124 (e.g., an inside antenna, device antenna, or a coupling antenna) and a donor antenna 126 (e.g., a node antenna or an outside antenna). The donor antenna 126 can receive the downlink signal from the base station 130. The downlink signal can be provided to the signal amplifier 122 via a second coaxial cable 127 or other type of radio frequency connection operable to communicate radio frequency signals. The signal amplifier 122 can include one or more cellular signal amplifiers for amplification and filtering. The downlink signal that has been amplified and filtered can be provided to the server antenna 124 via a first coaxial cable 125 or other type of radio frequency connection operable to communicate radio frequency signals. The server antenna 124 can wirelessly communicate the downlink signal that has been amplified and filtered to the wireless device 110.

Similarly, the server antenna 124 can receive an uplink signal from the wireless device 110. The uplink signal can be provided to the signal amplifier 122 via the first coaxial cable 125 or other type of radio frequency connection operable to communicate radio frequency signals. The signal amplifier 122 can include one or more cellular signal amplifiers for amplification and filtering. The uplink signal that has been amplified and filtered can be provided to the donor antenna 126 via the second coaxial cable 127 or other type of radio frequency connection operable to communicate radio frequency signals. The server antenna 126 can communicate the uplink signal that has been amplified and filtered to the base station 130.

In one example, the repeater 120 can filter the uplink and downlink signals using any suitable analog or digital filtering technology including, but not limited to, surface acoustic wave (SAW) filters, bulk acoustic wave (BAW) filters, film bulk acoustic resonator (FBAR) filters, ceramic filters, waveguide filters or low-temperature co-fired ceramic (LTCC) filters.

In one example, the repeater 120 can send uplink signals to a node and/or receive downlink signals from the node. The node can comprise a wireless wide area network (WWAN) access point (AP), a base station (BS), an evolved Node B (eNB), a baseband unit (BBU), a remote radio head (RRH), a remote radio equipment (RRE), a relay station (RS), a radio equipment (RE), a remote radio unit (RRU), a central processing module (CPM), or another type of WWAN access point.

In one example, the repeater 120 can include a battery to provide power to various components, such as the signal amplifier 122, the server antenna 124 and the donor antenna 126. The battery can also power the wireless device 110 (e.g., phone or tablet). Alternatively, the repeater 120 can receive power from the wireless device 110.

In one configuration, the repeater, also referred to as a repeater 120, can be a Federal Communications Commission (FCC)-compatible consumer repeater. As a non-limiting example, the repeater 120 can be compatible with FCC Part 20 or 47 Code of Federal Regulations (C.F.R.) Part 20.21 (March 21, 2013). In addition, the handheld booster can operate on the frequencies used for the provision of subscriber-based services under parts 22 (Cellular), 24 (Broadband PCS), 27 (AWS-1, 700 megahertz (MHz) Lower A-E Blocks, and 700 MHz Upper C Block), and 90 (Specialized Mobile Radio) of 47 C.F.R. The repeater 120 can be configured to automatically self-monitor its operation to ensure compliance with applicable noise and gain limits. The repeater 120 can either self-correct or shut down automatically if the repeater's operations violate the regulations defined in 47 CFR Part 20.21. While a repeater that is compatible with FCC regulations is provided as an example, it is not intended to be limiting. The repeater can be configured to be compatible with other governmental regulations based on the location where the repeater is configured to operate.

In one configuration, the repeater 120 can improve the wireless connection between the wireless device 110 and the base station 130 (e.g., cell tower) or another type of wireless wide area network (WWAN) access point (AP) by amplifying desired signals relative to a noise floor. The repeater 120 can boost signals for cellular standards, such as the Third Generation Partnership Project (3GPP) Long Term Evolution (LTE) Release 8, 9, 10, 11, 12, 13, 14, 15, or 16 standards or Institute of Electronics and Electrical Engineers (IEEE) 802.16. In one configuration, the repeater 120 can boost signals for 3GPP LTE Release 16.7.0 (October 2020) or other desired releases.

The repeater 120 can boost signals from the 3GPP Technical Specification (TS) 36.101 (Release 16.7.0 October 2020) bands, referred to as LTE frequency bands. For example, the repeater 120 can boost signals from one or more of the LTE frequency bands: 2, 4, 5, 12, 13, 17, 25, and 26. In addition, the repeater 120 can boost selected frequency bands based on the country or region in which the repeater is used, including any of bands 1-85 or other bands, as disclosed in 3GPP TS 36.104 V16.1.0 (March 2019), and depicted in Table 1:

**Table 1:**

| **LTE Opera ting Band** | **Uplink (UL) operating band BS receive UE transmit** | **Downlink (DL) operating band BS transmit UE receive** | **Duplex Mode** |
|---|---|---|---|
| | **F_{UL_low}** - **F_{UL_high}** | **F_{DL_low}** - **F_{DL_high}** | |
| 1 | 1920 MHz- 1980 MHz | 2110 MHz - 2170 MHz | FDD |
| 2 | 1850 MHz - 1910 MHz | 1930 MHz - 1990 MHz | FDD |
| 3 | 1710 MHz - 1785 MHz | 1805 MHz - 1880 MHz | FDD |
| 4 | 1710 MHz - 1755 MHz | 2110 MHz - 2155 MHz | FDD |
| 5 | 824 MHz - 849 MHz | 869 MHz - 894MHz | FDD |
| 6 (NOT E 1) | 830 MHz 840 MHz | 875 MHz 885 MHz | FDD |
| 7 | 2500 MHz - 2570 MHz | 2620 MHz - 2690 MHz | FDD |
| 8 | 880 MHz - 915 MHz | 925 MHz - 960 MHz | FDD |
| 9 | 1749.9 MHz - 1784.9 MHz | 1844.9 MHz - 1879.9 MHz | FDD |
| 10 | 1710 MHz - 1770 MHz | 2110 MHz - 2170 MHz | FDD |
| 11 | 1427.9 MHz - 1447.9 MHz | 1475.9 MHz - 1495.9 MHz | FDD |
| 12 | 699 MHz - 716 MHz | 729 MHz - 746 MHz | FDD |
| 13 | 777 MHz - 787 MHz | 746 MHz - 756 MHz | FDD |
| 14 | 788 MHz - 798 MHz | 758 MHz - 768 MHz | FDD |
| 15 | Reserve d | Reserve d | FDD |
| 16 | Reserve d | Reserve d | FDD |
| 17 | 704 MHz - 716 MHz | 734 MHz - 746 MHz | FDD |
| 18 | 815 MHz - 830 MHz | 860 MHz - 875 MHz | FDD |
| 19 | 830 MHz - 845 MHz | 875 MHz - 890 MHz | FDD |
| 20 | 832 MHz - 862 MHz | 791 MHz - 821 MHz | FDD |
| 21 | 1447.9 MHz - 1462.9 MHz | 1495.9 MHz - 1510.9 MHz | FDD |
| 22 | 3410 MHz - 3490 MHz | 3510 MHz - 3590 MHz | FDD |
| 23¹ | 2000 MHz - 2020 MHz | 2180 MHz - 2200 MHz | FDD |
| 24 | 1626.5 MHz - 1660.5 MHz | 1525 MHz - 1559 MHz | FDD |
| 25 | 1850 MHz - 1915 MHz | 1930 MHz - 1995 MHz | FDD |
| 26 | 814 MHz - 849 MHz | 859 MHz - 894 MHz | FDD |
| 27 | 807 MHz - 824 MHz | 852 MHz - 869 MHz | FDD |
| 28 | 703 MHz - 748 MHz | 758 MHz - 803 MHz | FDD |
| 29 | N/A | 717 MHz - 728 MHz | FDD (NOTE 2) |
| 30 | 2305 MHz - 2315 MHz | 2350 MHz - 2360 MHz | FDD |
| 31 | 452.5 MHz - 457.5 MHz | 462.5 MHz - 467.5 MHz | FDD |
| 32 | N/A | 1452 MHz - 1496 MHz | FDD (NOTE 2) |
| 33 | 1900 MHz - 1920 MHz | 1900 MHz - 1920 MHz | TDD |
| 34 | 2010 MHz - 2025 MHz | 2010 MHz - 2025 MHz | TDD |
| 35 | 1850 MHz - 1910 MHz | 1850 MHz - 1910 MHz | TDD |
| 36 | 1930 MHz - 1990 MHz | 1930 MHz - 1990 MHz | TDD |
| 37 | 1910 MHz - 1930 MHz | 1910 MHz - 1930 MHz | TDD |
| 38 | 2570 MHz - 2620 MHz | 2570 MHz - 2620 MHz | TDD |
| 39 | 1880 MHz - 1920 MHz | 1880 MHz - 1920 MHz | TDD |
| 40 | 2300 MHz - 2400 MHz | 2300 MHz - 2400 MHz | TDD |
| 41 | 2496 MHz - 2690 MHz | 2496 MHz - 2690 MHz | TDD |
| 42 | 3400 MHz - 3600 MHz | 3400 MHz - 3600 MHz | TDD |
| 43 | 3600 MHz - 3800 MHz | 3600 MHz - 3800 MHz | TDD |
| 44 | 703 MHz - 803 MHz | 703 MHz - 803 MHz | TDD |
| 45 | 1447 MHz - 1467 MHz | 1447 MHz - 1467 MHz | TDD |
| 46 | 5150 MHz - 5925 MHz | 5150 MHz - 5925 MHz | TDD (NOTE 3, NOTE 4) |
| 47 | 5855 MHz - 5925 MHz | 5855 MHz - 5925 MHz | TDD |
| 48 | 3550 MHz - 3700 MHz | 3550 MHz - 3700 MHz | TDD |
| 49 | 3550 MHz - 3700 MHz | 3550 MHz - 3700 MHz | TDD (NOTE 8) |
| 50 | 1432 MHz - 1517 MHz | 1432 MHz - 1517 MHz | TDD |
| 51 | 1427 MHz - 1432 MHz | 1427 MHz - 1432 MHz | TDD |
| 52 | 3300 MHz - 3400 MHz | 3300 MHz - 3400 MHz | TDD |
| 53 | 2483.5 MHz - 2495 MHz | 2483.5 MHz - 2495 MHz | TDD |
| 65 | 1920 MHz - 2010 MHz | 2110 MHz - 2200 MHz | FDD |
| 66 | 1710 MHz - 1780 MHz | 2110 MHz - 2200 MHz | FDD (NOTE 5) |
| 67 | N/A | 738 MHz - 758 MHz | FDD (NOTE 2) |
| 68 | 698 MHz - 728 MHz | 753 MHz - 783 MHz | FDD |
| 69 | N/A | 2570 MHz - 2620 MHz | FDD (NOTE 2) |
| 70 | 1695 MHz - 1710 MHz | 1995 MHz - 2020 MHz | FDD⁶ |
| 71 | 663 MHz - 698 MHz | 617 MHz - 652 MHz | FDD |
| 72 | 451 MHz - 456 MHz | 461 MHz - 466 MHz | FDD |
| 73 | 450 MHz - 455 MHz | 460 MHz - 465 MHz | FDD |
| 74 | 1427 MHz - 1470 MHz | 1475 MHz - 1518 MHz | FDD |
| 75 | N/A | 1432 MHz - 1517 MHz | FDD (NOTE 2) |
| 76 | N/A | 1427 MHz - 1432 MHz | FDD (NOTE 2) |
| 85 | 698 MHz - 716 MHz | 728 MHz - 746 MHz | FDD |
| NOTE 1: | Band 6, 23 are not applicable. | | |
| NOTE 2: | Restricted to E-UTRA operation when carrier aggregation is configured. The downlink operating band is paired with the uplink operating band (external) of the carrier aggregation configuration that is supporting the configured Pcell. | | |
| NOTE 3: | This band is an unlicensed band restricted to licensed-assisted operation using Frame Structure Type 3. | | |
| NOTE 4: | Band 46 is divided into four sub-bands as in Table 5.5-1A. | | |
| NOTE 5: | The range 2180 - 2200 MHz of the DL operating band is restricted to E-UTRA operation when carrier aggregation is configured. | | |
| NOTE 6: | The range 2010-2020 MHz of the DL operating band is restricted to E-UTRA operation when carrier aggregation is configured and TX-RX separation is 300 MHz. The range 2005-2020 MHz of the DL operating band is restricted to E-UTRA operation when carrier aggregation is configured and TX-RX separation is 295 MHz. | | |
| NOTE 7: | Void | | |
| NOTE 8: | This band is restricted to licensed-assisted operation using Frame Structure Type 3. | | |

In another configuration, the repeater 120 can boost signals from the 3GPP Technical Specification (TS) 38.104 (Release 16.5.0 October 2020) bands, referred to as 5G frequency bands. In addition, the repeater 120 can boost selected frequency bands based on the country or region in which the repeater is used, including any of bands n1 - n86 in frequency range 1 (FR1), n257 - n261 in frequency range 2 (FR2), or other bands, as disclosed in 3GPP TS 38.104 V16.5.0 (October 2020), and depicted in Table 2 and Table 3:

**Table 2:**

| **NR *operating band*** | **Uplink (UL) *operating band* BS receive** / **UE transmit F_{UL,Iow}** - **F_{UL,high}** | **Downlink (DL)** ***operating** band* **BS transmit** / **UE receive F_{DL,Iow}** - **F_{DL,high}** | **Duplex Mode** |
|---|---|---|---|
| n1 | 1920 MHz - 1980 MHz | 2110 MHz - 2170 MHz | FDD |
| n2 | 1850 MHz - 1910 MHz | 1930 MHz - 1990 MHz | FDD |
| n3 | 1710 MHz - 1785 MHz | 1805 MHz - 1880 MHz | FDD |
| n5 | 824 MHz - 849 MHz | 869 MHz - 894 MHz | FDD |
| n7 | 2500 MHz - 2570 MHz | 2620 MHz-2690 MHz | FDD |
| n8 | 880 MHz - 915 MHz | 925 MHz-960 MHz | FDD |
| n12 | 699 MHz - 716 MHz | 729 MHz - 746 MHz | FDD |
| n20 | 832 MHz - 862 MHz | 791 MHz - 821 MHz | FDD |
| n25 | 1850 MHz - 1915 MHz | 1930 MHz - 1995 MHz | FDD |
| n28 | 703 MHz - 748 MHz | 758 MHz - 803 MHz | FDD |
| n34 | 2010 MHz - 2025 MHz | 2010 MHz - 2025 MHz | TDD |
| n38 | 2570 MHz - 2620 MHz | 2570 MHz - 2620 MHz | TDD |
| n39 | 1880 MHz - 1920 MHz | 1880 MHz - 1920 MHz | TDD |
| n40 | 2300 MHz - 2400 MHz | 2300 MHz - 2400 MHz | TDD |
| n41 | 2496 MHz - 2690 MHz | 2496 MHz - 2690 MHz | TDD |
| n50 | 1432 MHz - 1517 MHz | 1432 MHz - 1517 MHz | TDD |
| n51 | 1427 MHz - 1432 MHz | 1427 MHz -1432 MHz | TDD |
| n65 | 1920 MHz - 2010 MHz | 2110 MHz - 2200 MHz | FDD |
| n66 | 1710 MHz - 1780 MHz | 2110 MHz - 2200 MHz | FDD |
| n70 | 1695 MHz - 1710 MHz | 1995 MHz - 2020 MHz | FDD |
| n71 | 663 MHz - 698 MHz | 617 MHz - 652 MHz | FDD |
| n74 | 1427 MHz - 1470 MHz | 1475 MHz - 1518 MHz | FDD |
| n75 | N/A | 1432 MHz - 1517 MHz | SDL |
| n76 | N/A | 1427 MHz - 1432 MHz | SDL |
| n77 | 3300 MHz - 4200 MHz | 3300 MHz - 4200 MHz | TDD |
| n78 | 3300 MHz - 3800 MHz | 3300 MHz - 3800 MHz | TDD |
| n79 | 4400 MHz - 5000 MHz | 4400 MHz - 5000 MHz | TDD |
| n80 | 1710 MHz - 1785 MHz | N/A | SUL |
| n81 | 880 MHz - 915 MHz | N/A | SUL |
| n82 | 832 MHz - 862 MHz | N/A | SUL |
| n83 | 703 MHz - 748 MHz | N/A | SUL |
| n84 | 1920 MHz - 1980 MHz | N/A | SUL |
| n86 | 1710 MHz - 1780 MHz | N/A | SUL |

**Table 3:**

| **NR *operating band*** | **Uplink (UL) and Downlink (DL) *operating band* BS transmit/receive UE transmit/receive F_{UL,Iow}** - **F_{UL,high} F_{DL,Iow}** - **F_{DL,high}** | **Duplex Mode** |
|---|---|---|
| n257 | 26500 MHz - 29500 MHz | TDD |
| n258 | 24250 MHz - 27500 MHz | TDD |
| n260 | 37000 MHz - 40000 MHz | TDD |
| n261 | 27500 MHz - 28350 MHz | TDD |

The number of 3GPP LTE or 5G frequency bands and the level of signal improvement can vary based on a particular wireless device, cellular node, or location. Additional domestic and international frequencies can also be included to offer increased functionality. Selected models of the repeater 120 can be configured to operate with selected frequency bands based on the location of use. In another example, the repeater 120 can automatically sense from the wireless device 110 or base station 130 (or GPS, etc.) which frequencies are used, which can be a benefit for international travelers.

In one example, the repeater can be configured to transmit a downlink (DL) signal in a millimeter wave (mm Wave) frequency range, and transmit an uplink (UL) signal in a sub-6 gigahertz (GHz) frequency range. In this example, a mm Wave frequency range can be a frequency between 6 GHz and 300 GHz.

In one configuration, multiple repeaters can be used to amplify UL and DL signals. For example, a first repeater can be used to amplify UL signals and a second repeater can be used to amplify DL signals. In addition, different repeaters can be used to amplify different frequency ranges.

In one configuration, the repeater 120 can be configured to identify when the wireless device 110 receives a relatively strong downlink signal. An example of a strong downlink signal can be a downlink signal with a signal strength greater than approximately -80dBm. The repeater 120 can be configured to automatically turn off selected features, such as amplification, to conserve battery life. When the repeater 120 senses that the wireless device 110 is receiving a relatively weak downlink signal, the booster can be configured to provide amplification of the downlink signal. An example of a weak downlink signal can be a downlink signal with a signal strength less than -80dBm.

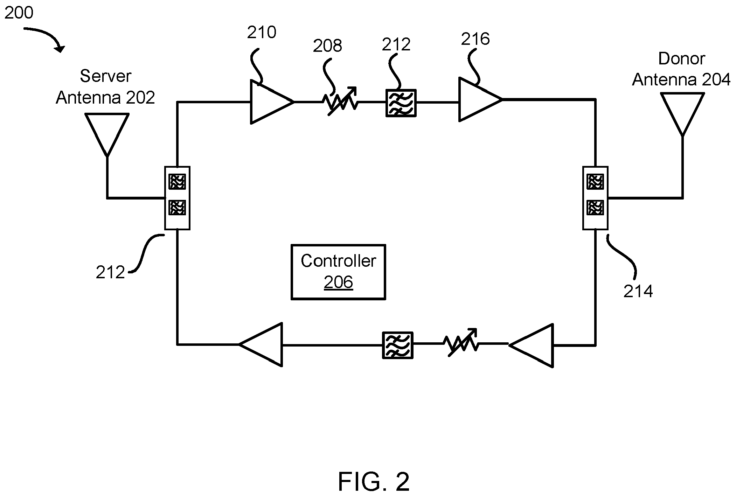

In an example, as illustrated in FIG. 2, a bi-directional repeater system can comprise a repeater 200 connected to a donor antenna 204 and a server antenna 202. The repeater 200 can include a donor antenna port that can be internally coupled to a second duplexer (or diplexer or multiplexer or circulator or splitter) 214. The repeater 200 can include a server antenna port that can also be coupled to a first duplexer (or diplexer or multiplexer or circulator or splitter) 212. Between the two duplexers, 214 and 212, can be two paths: a first path and a second path. The first path can comprise a low noise amplifier (LNA) with an input coupled to the first duplexer 212, a variable attenuator coupled to an output of the LNA, a filter coupled to the variable attenuator, and a power amplifier (PA) coupled between the filter and the second duplexer 214. The LNA can amplify a lower power signal without degrading the signal to noise ratio. The PA can adjust and amplify the power level by a desired amount. A second path can comprise an LNA with an input coupled to the second duplexer 214, a variable attenuator coupled to an output of the LNA, a filter coupled to the variable attenuator, and a PA coupled between the filter and the first duplexer 212. The first path can be a downlink amplification path or an uplink amplification path. The second path can be a downlink amplification path or an uplink amplification path. The repeater 200 can also comprise a controller 206. In one example, the controller 206 can include one or more processors and memory.

In some embodiments the controller 206 can adjust the gain of the first path and/or the second path based on wireless communication conditions. If included in the repeater 200, the controller 206 can be implemented by any suitable mechanism, such as a program, software, function, library, software as a service, analog or digital circuitry, or any combination thereof. The controller 206 can also include a processor coupled to memory. The processor can include, for example, a microprocessor, microcontroller, digital signal processor (DSP), application specific integrated circuit (ASIC), a Field Programmable Gate Array (FPGA), or any other digital or analog circuitry configured to interpret and/or to execute program instructions and/or to process data. In some embodiments, the processor can interpret and/or execute program instructions and/or process data stored in the memory. The instructions can include instructions for adjusting the gain of the first path and/or the second path. For example, the adjustments can be based on radio frequency (RF) signal inputs.

The memory can include any suitable computer readable media configured to retain program instructions and/or data for a period of time. By way of example, and not limitation, such computer readable media can include tangible computer readable storage media including random access memory (RAM), read only memory (ROM), electrically erasable programmable read only memory (EEPROM), a compact disk (CD) ROM or other optical disk storage, magnetic disk storage or other magnetic storage devices, flash memory devices (e.g., solid state memory devices) or any other storage medium which can be used to carry or store desired program code in the form of computer executable instructions or data structures and which can be accessed by a general purpose or special purpose computer. Combinations of the above can also be included within the scope of computer readable media. Computer executable instructions can include, for example, instructions and data that cause a general purpose computer, special purpose computer, or special purpose processing device to perform a certain function or group of functions.

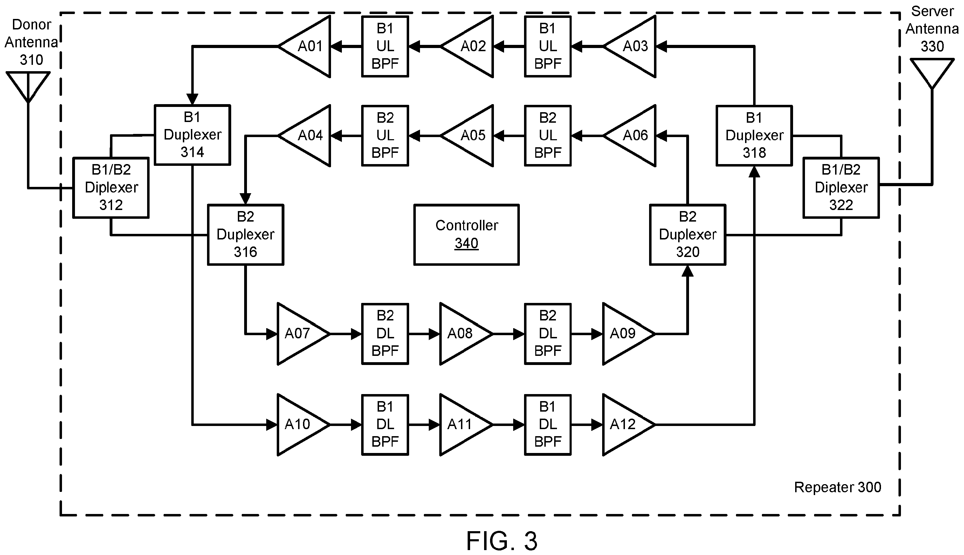

In another example, as illustrated in FIG. 3, a repeater can be configured as a multiband bi-directional FDD wireless signal booster 300 configured to amplify an uplink signal and a downlink signal in multiple bands or channels using a separate signal path for one or more uplink frequency bands or channels and one or more downlink frequency bands or channels. In one embodiment, adjacent bands can be included on a same signal path. A controller 340 can adjust the gain of each signal path based on wireless communication conditions.

A donor antenna 310, or an integrated node antenna, can receive a downlink signal. For example, the downlink signal can be received from a base station. The downlink signal can be provided to a first B1/B2 diplexer 312, wherein B1 represents a first frequency band and B2 represents a second frequency band. The first B1/B2 diplexer 312 can direct selected portions of a received signal to a B1 downlink signal path and a B2 downlink signal path. A downlink signal that is associated with B1 can travel along the B1 downlink signal path to a first B1 duplexer 314. A portion of the received signal that is within the B2 can travel along the B2 downlink signal path to a first B2 duplexer 316. After passing the first B1 duplexer 314, the downlink signal can travel through a series of amplifiers (e.g. A10, A11, and A12) and downlink bandpass filters (e.g. B1 DL BPF) to a second B1 duplexer 318. In addition, the B2 downlink signal passing through the B2 duplexer 316, can travel through a series of amplifiers (e.g. A07, A08, and A09) and downlink band pass filters (e.g. B2 DL BPF) to a second B2 duplexer 320. At this point, the downlink signals (B1 or B2) have been amplified and filtered in accordance with the type of amplifiers and BPFs included in the multiband bi-directional wireless signal booster 300. The downlink signals from the second B1 duplexer 318 or the second B2 duplexer 320, respectively, can be provided to a second B1/B2 diplexer 322. The second B1/B2 diplexer 322 can direct the B1/B2 amplified downlink signal to a server antenna 330, or an integrated device antenna. The server antenna 330 can communicate the amplified downlink signal to a wireless device, such as a UE.

In another example, the server antenna 330 can receive an uplink (UL) signal from a wireless device. The uplink signal can include a first frequency range, such as a Band 1 signal and a second frequency range, such as a Band 2 signal. The uplink signal can be provided to the second B1/B2 diplexer 322. The second B1/B2 diplexer 322 can direct the signals, based on their frequency, to a B1 uplink signal path and a B2 uplink signal path. An uplink signal that is associated with B1 can travel along the B1 uplink signal path to a second B1 duplexer 318, and an uplink signal that is associated with B2 can travel along the B2 uplink signal path to a second B2 duplexer 320. The second B1 duplexer 318 can direct the B1 uplink signal to travel through a series of amplifiers (e.g. A01, A02, and A03) and uplink bandpass filters (B1 UL BPF) to the first B1 duplexer 314. In addition, the second B2 duplexer 320 can direct the B2 uplink signal to travel through a series of amplifiers (e.g. A04, A05, and A06) and downlink band pass filters (B2 UL BPF) to the first B2 duplexer 316. At this point, the uplink signals (B1 and B2) have been amplified and filtered in accordance with the type of amplifiers and BPFs included in the bi-directional wireless signal booster 300. The uplink signals from the first B1 duplexer 314 and the first B2 duplexer 316, respectively, can be provided to the first B1/B2 diplexer 312. The first B1/B2 diplexer 312 can direct the B1 and B2 amplified uplink signals to the donor antenna 310, or an integrated device antenna. The donor antenna 310 can communicate the amplified uplink signals to a base station.

When the uplink signal received at a base station from a UE is clear (i.e. has relatively low noise) and has relatively high power, the base station is configured to assume that the UE is relatively close or has a direct line of sight to the base station and/or has relatively low levels of interference. Similarly, a UE is configured to measure downlink signals transmitted from the base station to the UE. When the downlink signal received at the UE is clear and has relatively high power, then the base station and UE continue to assume that the UE is located close to the base station or has a direct line of sight with low levels of interference between the UE and the base station. Certain assumptions are then made by the cellular communications system, the base station, and/or the UE. The assumptions can include the transmit power for transmitted signals, the timing of the signals, the band(s) selected for the transmission and reception of the signals, the type of carrier aggregation used, the modulation and coding scheme used in the transmission and reception of the signals, and so forth. Additional determinations in 5G communications can include whether frequency hopping is used, and whether a whole band or a bandwidth part (BWP) is used for communication with the UE.

When cellular repeaters are used, unbeknownst to the cellular communication system, the uplink and downlink signals communicated by the cellular repeater typically have higher power levels and lower noise power levels relative to cellular signals when the cellular repeater is not used. In response to the higher power signals with and lower noise power, the cellular communication system may select to transmit downlink signals from the base station with a lower transmit power level and/or a higher modulation and coding scheme (MCS). For example, a modulation of 64 phase shift key (PSK) may be used instead of 16PSK, QPSK or BPSK. Similarly, a coding scheme may be selected that assumes minimal noise and maximum data throughput. In addition, the downlink signal from the base station may be transmitted at a lower power level that is below the maximum power the base station is permitted to transmit.

Unfortunately, the assumptions and selections made by the cellular communication system are typically inaccurate for a signal that is filtered and amplified by a cellular repeater. The cellular repeater and the associated UE are typically further away from the base station than the measurements by the cellular communication system show. In many cases, a cellular repeater is used at locations that are sufficiently far from the base station, that the downlink signal from the base station may not be able to be received at a UE without the use of the cellular repeater. Without the filtering and amplification of the cellular signal by the cellular repeater, the cellular signal does not have sufficient amplitude and/or has too high of a signal to noise ratio to be successfully received and decoded at the UE. Similarly, the base station may not be capable of receiving the uplink signal transmitted by the UE. The filtering and amplification of the downlink signal(s) and uplink signal(s) by the cellular repeater makes it appear to the UE that the base station is fairly close or in a direct line of site with low levels of interference based on the signal power and noise levels of the cellular signal. However, the base station may be a substantial distance away from the UE.

It is typically not possible for the cellular repeater to inform the cellular communication system that a cellular signal has been filtered and amplified by the repeater. Accordingly, the cellular communication system is not capable of making informed decisions with regards to cellular signals that have been filtered and/or amplified by a cellular repeater.

To overcome the limitations caused by the incorrect assumptions and selections made by the cellular communication system with respect to filtered and amplified cellular signals from a cellular repeater, the cellular repeater can be configured to make operational adjustments to the downlink and uplink signals that can result in higher throughput between the base station and the UE, via the cellular repeater.

The operational adjustments can be performed based on UE connectivity metrics of the UE in the cellular communication system. The UE connectivity metrics may be measured by the UE, one or more base stations in communication with the UE, or the cellular communication system. In addition, the UE connectivity metrics can include data throughput between the UE and the one or more base stations, and signal power measurements performed at the cellular repeater of downlink signals sent from the one or more base stations to the UE and uplink signals transmitted from the UE to the one or more base stations. In one embodiment, the UE connectivity metrics that are associated with a selected base station, or communication between the UE and a selected base station, can include a base station identifier for each recorded metric. For example, a common identifier for a base station is a cell ID of the base station. Accordingly, the UE connectivity metrics can include a cell ID of a base station when the metric is associated with the base station. The UE connectivity metrics can include measurements for multiple base stations, with each measurement associated with the cell ID of the base station.

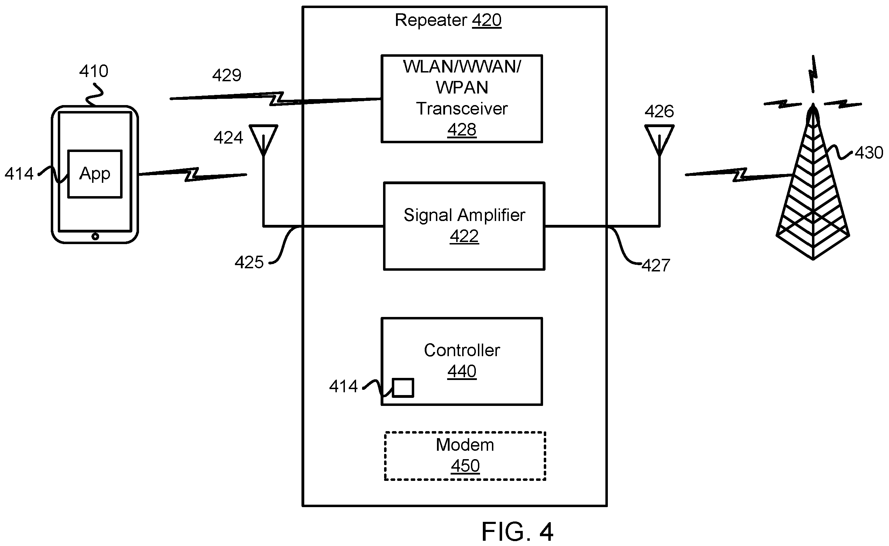

In accordance with one embodiment of the present invention, illustrated in the example of FIG. 4, a repeater system 420 operable to adjust settings based on UE connectivity metrics is disclosed. The repeater system 420 can comprise a first antenna port 425 that is configured to be coupled to a first antenna 424. A second antenna port 427 that is configured to be coupled to a second antenna 426. The repeater system 420 further comprises one or more first direction amplification and filtering paths, such as the Band 1 (B1) or Band 2 (B2) UL or DL paths illustrated in FIG. 3. The first direction amplification and filtering paths are coupled between the first antenna port 425 and the second antenna port 427. The term "first direction", as used herein, can refer to signals transmitted in a first direction. The first direction may be selected as uplink (UL) signals or downlink (DL) signals. Conversely, "second direction signals" are DL signals or UL signals that are directed in the opposite direction of the first direction signals. One or more second direction amplification and filtering paths, such as the B2 or B1 DL or UL paths illustrated in FIG. 3, are coupled between the second antenna port 427 and the first antenna port 425.

While two separate UL and DL bands are illustrated in FIG. 3, this is not intended to be limiting. A multiband cellular repeater can include 3, 4, 5, 6, 7 or more bands in both a first direction and a second direction. Each band can include multiple UL and/or DL channels. In addition, there can be more bands in one direction than the opposite direction. For example, more UL bans than DL bands, or more DL bands than UL bands. Each amplification and filtering path can be configured for a single band. Alternatively, an amplification and filtering path can be configured for two or more bands. For example, a single amplification and filtering path can be configured to amplify and filter B12 DL and B13 DL. Two separate amplification and filtering paths can be used to amplify and filter B12 UL and B13 UL, respectively. Each amplification and filtering path can be configured with selected bandpass filters, low noise amplifiers (LNA), power amplifiers (PAs), and variable attenuators configured to operate over one or more selected first direction bands or second direction bands. Each band can be a 3GPP band, as illustrated in Table 1, Table 2 and Table 3. Additional bands may also be used that are not currently listed in the 3GPP tables.

The repeater system 420 further comprises a wireless network transceiver 428 that is configured to receive cellular network connectivity metrics (metrics) from a UE 410 that is configured to use the repeater system 420. The wireless network transceiver 428 can be configured as a wireless wide area network (WWAN) transceiver, such as a 3GPP transceiver, a wireless local area network (WLAN) such as Wi-Fi or Bluetooth, or a wireless personal area network (WPAN) transceiver such as a Zigbee transceiver, any or all of which can also be used to receive the cellular network connectivity metrics. The transceiver 428 can also transmit data from the repeater system 428 to the UE 410. Optionally, the repeater system 420 can include a modem 450 that can also be used to receive the cellular network connectivity metrics. The modem may receive the metrics directly from the UE 410, such as in UL signals sent from the UE 410 to the base station 430 via the cellular repeater 420. Alternatively, the modem 450 may receive some or all of the metrics for the UE from the DL signals sent to the UE 410 from base station 430 and/or the wireless communications system 150 (i.e. the core network).

A controller 440 is coupled to the one or more first direction amplification and filtering paths, the one or more second direction amplification and filtering paths, and the transceiver 428. The transceiver can be configured to operate using a short range wireless communication standard such as Bluetooth v4.0, Bluetooth Low Energy, Bluetooth v4.1, Bluetooth v4.2, Bluetooth v5, Bluetooth v5.1, Bluetooth v5.2, Institute of Electronics and Electrical Engineers (IEEE) 802.11a, IEEE 802.11 b, IEEE 802.11g, IEEE 802.11 n, IEEE 802.11ac, IEEE 802.11ad, IEEE 802.11-2016, IEEE 802.11 ah, IEEE 802.11ai, IEEE 802.11aj, IEEE 802.11 aq, IEEE 802.11 ax, IEEE 802.11 ay, IEEE 802.11 be, or IEEE 802.11-2020.

The controller 440 is configured to perform operational adjustments at the repeater system 420 for the UE 410 in response to the metrics received at the repeater system 420 from the UE 410. The operational adjustments comprise one or more of: a change in gain of one or more of the one or more first direction amplification and filtering paths for a first direction signal of the UE; a change in gain of one or more of the one or more second direction amplification and filtering paths for a second direction signal of the UE; a change in output power of the first direction signal of the UE; a change in output power of the second direction signal of the UE; a change in transmitted noise power of the first direction signal of the UE; or a change in transmitted noise power of the second direction signal for the UE. The change in gain or change in output power or change in transmitted noise power of in each of the amplification and filtering paths can include relatively small changes to maximize data throughput and/or signal quality. The small changes may be increases or decreases in gain, output power, and/or transmitted noise power. The changes in gain, output power, and/or transmitted noise power can be limited by governmental requirements for the repeater 420. For example, in the United States, the gain, output power, and transmitted noise power can be limited by Part 20 or 47 of C. F. R. Part 20.21 (March 21, 2013), as previously discussed. In addition, the changes in gain, output power, and/or transmitted noise power can also be limited by power limits selected to prevent oscillation in the repeater system or overload of the amplifiers. The change in gain an amplification and filtering path can be accomplished by increasing or decreasing the gain of one or more amplifiers in the amplification and filtering path. Alternatively, a change in a variable attenuator, such as 208, can be performed. The controller 440 can send a signal to an amplifier or variable attenuator to increase or decrease the amplification and/or signal power of a signal for the amplification and filtering path.

In addition to relatively small changes, relatively large changes in gain or output power can be made in the amplification and filtering paths to effectively turn one or more of the first direction amplification and filtering paths or second direction filtering paths to an on or off status. For example, the gain of the amplifiers and/or the variable attenuators can be changed by a significant amount, such as greater than 10 dB to effectively turn the path on or off. The on or off status can be used to select UL channels and DL channels that are to be filtered and amplified at the cellular repeater 420. This will be discussed more in the proceeding paragraphs.

The cellular repeater 420 can be configured to receive cellular network connectivity metrics (metrics) from the UE 410 via a wireless link 429 with the WLAN/WWAN/WPAN transceiver 428. In one example, the metrics can comprise information regarding data throughput between the UE 410 and the base station 430 via the repeater 420 over a specific time period. Data throughput can be measured using a standard speed test, in which downlink data rates and/or uplink data rates are measured over a period of time.

Alternatively, rather than sending the metrics to the repeater 420 for analysis and processing at the repeater 420, the metrics can be processed and analyzed at the UE 410. In one example, a software application 414 operating on the UE 410 can be configured to send instructions to the repeater 420 via the controller 440. The instructions can include operational adjustments for the controller to make at the repeater 420, based on the metrics gathered at the UE 410. The metrics may be analyzed by the app 414. The metrics may be analyzed by the app 414 based on which base station (i.e. cell ID) the metrics are associated with. Alternatively, a separate application running elsewhere may analyze the metrics and send information to the app 414 that can then be passed on to the repeater 420. Alternatively, the application 414 can communicate with an application running on the repeater 420. The application running on the repeater 420 can run on the controller 440. Alternatively, the controller 440 can comprise multiple different processors, including an application processors and memory that is configured to run a software application.

The software application 414 can run a speed test at the UE 410 for a selected time period to measure downlink and/or uplink data rates for cellular communication data transmitted between the UE 410 and base station 430 via the repeater 420. The speed test can be tied to a cell ID of the base station 430. Multiple different speed tests can be performed, with operational adjustments made at the repeater 420 between each speed test. In one example, each of the speed tests can be limited to a selected amount of data to limit the amount of data used in the UE's data plan with a selected carrier.

The software application 414 can determine which bands or channels are used, or can be used by the cellular network system 150 (FIG. 1a) for communication between the UE 410 and the base station 430. The gain, output power, transmitted noise power, or on/off status of the amplification and filtering paths at the repeater can then be adjusted (i.e. increased or decreased) between speed tests.

In one example, the operational adjustments can include minor adjustments in gain (i.e. 1 to 3 dB) on selected UL or DL bands at the repeater. For instance, a first cellular wireless speed test can be performed at the UE. The gain, output power, or transmitted noise power of the UL signal can then be decreased by a selected amount on one or more bands or channels within a band by making changes in the components of one or more the first direction amplification and filtering paths or second direction amplification and filtering paths of the repeater system 420. The decrease in gain, output power, or transmitted noise power of the UL signal transmitted from the **UE** 410 to the base station 430 via the repeater system 420 will be measured when the UL signal is received at the base station 430. The base station 430 or cellular network system may then make changes to the DL signal transmitted from the base station 430 to the UE 410 based on the changes measured in the UL signal.

For instance, the base station 430 or cellular communication system may select a new MCS for the DL signal with a modulation type that is reduced from 64PSK to 16PSK or QPSK, or a different coding scheme may be selected. The MCS used for DL communications between the base station 430 and UE 410 prior to the change in the UL signal may not have been appropriate for the actual distance between the UE 410 and the base station 430. An MCS designed for a short communication distance can result in significant data loss when used to transmit a signal a longer distance, or over a distance with significant noise or interference. The reduced MCS for the DL signal that is selected based on the reduced measured UL signal power may result with a DL signal that has lower packet loss. The reduced packet loss can cause an overall increase in data throughput between the base station 430 and the UE 410 via the cellular repeater 420. Speed tests can be performed at a variety of different gain levels for the first direction amplification and filtering paths and the second direction and filtering paths used for the different channels or bands that are selected for communication between the base station 430 and UE 410 via the repeater 420.

In another example, the gain or output power of selected bands or channels of the one or more first or second direction amplification and filtering paths can be reduced (i.e. reduced by greater than 10 dB to 150 dB) or turned off to effectively turn off the selected band or channel. For instance, the cellular repeater system may select DL band(s) and/or UL band(s) that are typically used for short range communication. The bands selected by the cellular repeater system may have sufficient atmospheric loss that they are typically not used for longer range communication. However, due to the amplification and filtering performed by the repeater 430, the cellular repeater system may assume that the UE 410 and base station 430 are closer than they really are. The selected UL and/or DL band(s) can be effectively turned off by reducing or turning off the gain of the amplification and filtering path at the cellular repeater 420 that are configured for that band. In one example, both the UL and DL (first direction and second direction) amplification and filtering paths can be turned off for a selected band. Alternatively, only one of the first direction or second direction amplification and filtering paths may be turned off.

The distance between the UE 410 and the base station 430 may be sufficient that communication in the selected band is no longer possible between the **UE** 410 and the base station 430 without the use of the repeater 420 to filter and amplify the UL or DL signals. Accordingly, reducing the gain of the amplification and filtering path(s) can effectively cause the cellular repeater system to be unable to communicate in the selected band. When this occurs, the cellular communication system can select different band(s) or channel(s) for communication between the base station 430 and the UE 410. In one example, the different band(s) can be lower frequency band(s) with lower atmospheric loss, or bands in selected frequencies know to have relatively low atmospheric loss. The lower atmospheric loss enables higher MCS to be used, and a signal with higher power to reach the cellular repeater. Accordingly, turning off selected amplification and filtering paths associated with selected UL and/or DL bands or channels at the repeater can enable greater data throughput between the UE 410 and the base station 430 via the cellular repeater 420.

In one example, the software application 414 can be configured to identify the speed test with the greatest data throughput. The software application can then instruct the controller 440, and/or the controller 440 in the cellular repeater 420 can then make the operational adjustments at the repeater that coincides with the speed test with the greatest data throughput for the UL band(s) and DL band(s) at the cellular repeater 420. The gain levels and/or output power for selected band(s) or channel(s) used for communication between the UE 410 and the base station 430 via the cellular repeater 420 can be set at the first and second direction amplification and filtering path(s) to provide the greatest data throughput based on the speed tests that are performed.

In certain environments, such as low density population environments in the country, the speed test that provides the greatest data throughput can be constant throughout the day. However, in higher density population environments, changes in population throughput the day can cause changes in throughput as different base stations are used by different numbers of people throughout the day.

For example, in a suburb or bedroom community near a large city, base stations located in the bedroom community may be used relatively heavily in the morning as people wake up, check the news, stocks and weather, and stream television shows as they get ready for work. However, base stations located downtown in the large city may only receive light use. As people commute to work, the use of the base stations in the bedroom community decreases and the use of the base stations downtown increases as people arrive at work. The opposite occurs in the evenings as people commute back to their homes from their work downtown. UE connectivity metrics can be measured and/or recorded for each base station. Each metric associated with a selected base station can include a cell ID of the base station, or another identification of the base station. The metrics for the different base stations can then be compared at the app 414 on the UE 410 or the cellular repeater 420.

The cellular repeater 420 can take advantage of the lightly used base stations throughout the day. The speed tests can be performed based on the different operational adjustments, as previously discussed. Each speed test can be associated with a selected time period. The speed tests can be performed at different times throughout the day and on different days. The operational adjustments at the cellular repeater 420 that provide the greatest data throughput in the morning may be different than the operational adjustments that provide the greatest data throughput in the afternoon or evening. Similarly, different operational adjustments may be used on weekends relative to week days. The software application 414 can configure the cellular repeater 420 with the operational adjustments that provides the greatest data throughput at a selected time period, such as morning, afternoon, or evening on a selected day, such as a week day or weekend.

Cellular communication systems 150 are typically configured such that UEs 110 are in communication with multiple different base stations 130, 140. In some instances, a single base station 130 is selected for the UE to communication with. In other instances, the UE 110 may communicate with multiple base stations 130, 140 at the same time. The repeater 420 can be configured to receive DL signals and transmit UL signals to one or multiple repeaters. The repeater 420 can be connected to a directional donor antenna, such as antenna 426, to communicate with a selected base station 430. A donor antenna with a broader radiation pattern, such as 45 degrees, 90 degrees, 135 degrees, 180 degrees, 270 degrees, or 360 degrees may be selected to enable the repeater to receive DL signals and transmit UL signals to multiple base stations. A donor antenna with a narrower radiation pattern can communicate with fewer base stations, but can provide greater gain to enable the repeater to communicate with base station(s) located further from the repeater.

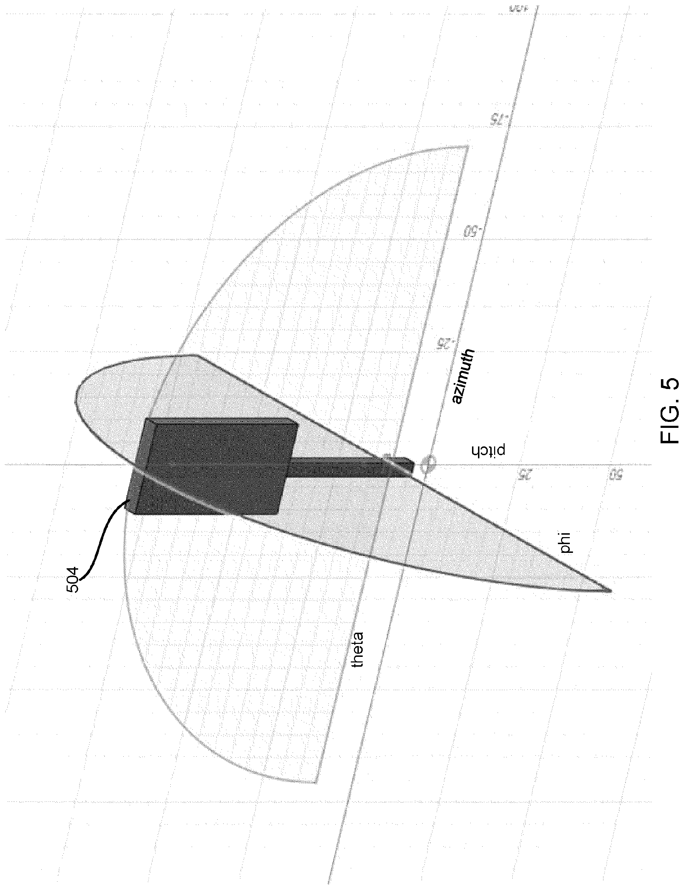

FIG. 5 provides an example illustration of a donor antenna 504. The donor antenna 504 can be coupled to one or more motors to allow the antenna to be moved about in one or two axes. In the example of FIG. 5, the donor antenna can revolve around the center of a hemisphere in the theta direction along the azimuth axis. A second motor can be used to rotate the antenna in the phi direction along the pitch axis. The software application 414 can be configured to send signals to the motor(s) to enable the donor antenna 504 to be rotated about one or more of the axes between different speed tests to determine a direction for the antenna that provides the greatest throughput. Alternatively, an array of donor antennas can be used to electrically steer an UL signal for transmission and/or a DL signal for reception in a certain direction.

The software application 414 can enable communication between the UE 410 and the donor antenna 504 of the repeater system 420 to physically steer the antenna and/or electrically steer the transmission and reception of the UL and DL signal(s). Alternatively, the software application 414 can communicate with the controller 440 in the cellular repeater 420. The controller 440 can then communicate with the donor antenna 504 to physically steer the antenna and/or electrically steer an antenna array for the UL signal transmission or DL signal reception with one or more base stations 430. The theta-phi coordinates that provide the greatest throughput can be stored and used in conjunction with the operational adjustments that provide the greatest throughput.

In one embodiment, the positioning of the donor antenna to provide maximum throughput between the UE 410 and the base station(s) can occur before the operational adjustments are performed. Once the antenna 504 is optimally positioned for communication with the base station(s), the operational adjustments can then be made with speed tests to determine the best gain and/or output power for each of the amplification and filtering paths to provide a maximum data throughput, as measured by the speed tests for cellular signals transmitted between the **UE** 410 and the base station 430 via the repeater 420. When multiple base stations are available in higher density population areas, the time of day can be saved along with the antenna directional coordinates when positioning the donor antenna. The donor antenna may be directed towards the base station(s) with the lowest use and/or that provide the greatest throughput at selected times during the day.

While data throughput can typically be used to optimize a wireless connection of the UE 410 with one or more base stations 430 via a cellular repeater 420, there are cases in which other types of measurements can be used to provide a desired operability of the UE. For example, when a UE is used in a real-time video conference, or is used to stream video, it may be more important to have a signal with a predetermined quality, rather than a signal with a maximum throughput. As previously discussed, a wide variety of different types of measurements are performed between the UE 410 and the base station 430 in a cellular communication system. A measurement such as the channel quality indicator (CQI) that is performed between the UE 410 and the base station 430 may be more helpful to ensure the video conference or video streaming occurs with minimal interruptions. Accordingly, multiple different types of measurements can be saved for each operational adjustment and/or donor antenna. Some of the measurements may be measured at the UE 410. Other measurements may be performed at a base station in communication with the UE 410, or in the core network of the cellular communication system 150 and transmitted to the UE 410.

Example measurements that may be used to determine operational adjustments to perform at the cellular repeater 420 include, but are not limited to: a received signal strength indicator (RSSI) measurement; a reference signal received power (RSRP) measurement; a reference signal received quality (RSRQ) measurement; a channel quality indicator (CQI) measurement; a signal to noise ratio (SNR) measurement; a signal to interference noise ratio (SINR) measurement; an uplink data throughput measurement; a downlink data throughput measurement; a modulation and coding scheme (MCS) used to communicate data between the base station and the UE; a rank indicator (RI) value of the UE; a Pre-coding Matrix Indicator (PMI) of the UE; a location of the UE at the time a selected metric is measured; a distance between the UE and one of the first antenna and the second antenna at the time a selected metric is measured; a time of day that a selected metric is measured; a weather condition at the time that a selected metric is measured; a dropped call history for the UE; a location of the UE for each dropped call in the dropped call history; an output power of the UE for an uplink signal transmitted by the UE; one or more channels for an uplink transmission from the UE; one or more channels in a downlink signal received at the UE; one or more bands for an uplink signal transmitted from the UE; one or more bands in a downlink signal received at the UE; a bandwidth part (BWP) for an uplink signal transmitted from the UE; a BWP for a downlink signal received at the UE; frequency hopping information for the uplink and downlink signals transmitted between the UE and the base station; downlink control information (DCI) for the UE; uplink control information (UCI) for the UE; network latency for the one or more base stations; or a multiple input multiple output (MIMO) status of the UE and/or the base station. Each of these measurements or information that are associated with a specific base station can be associated with the specific base station using an identifier such as the base station's cell ID, as previously discussed.

When a repeater system 420 is first setup, hundreds or thousands of measurements may be used by the repeater 420 to optimize communications between the UE 410 and one or more base stations 430 at different times of day, and in different weather and atmospheric conditions. The application 414 can continue to send periodic instructions to the controller 440 to perform operational adjustments of the components of the first direction and second direction amplification and filtering paths. Some types of measurements can be averaged over time and stored at the UE 410 or controller 440. Other types of measurements are best used in real time. Some changes, such as effectively turning "on" or "off" selected channels by adjusting the gain or output power of selected amplification and filtering paths, may be made each time the repeater system 420 is used to amplify and filter signals from the UE 410 and base station 430.

In one example, an automatic gain control (AGC) level of one or more of the first direction amplification and filtering paths or one or more of the second direction amplification and filtering paths can be changed (i.e. increased or decreased) in response to the metrics of the UE or in response to the received instructions to change the output power or the transmitted noise power.

In another example, an impedance of a matching network can be adjusted relative to an impedance of an output of a power amplifier of one or more of the first direction amplification and filtering paths or one or more of the second direction amplification and filtering paths in response to the metrics of the UE or in response to the received instructions to change the output power or the transmitted noise power.

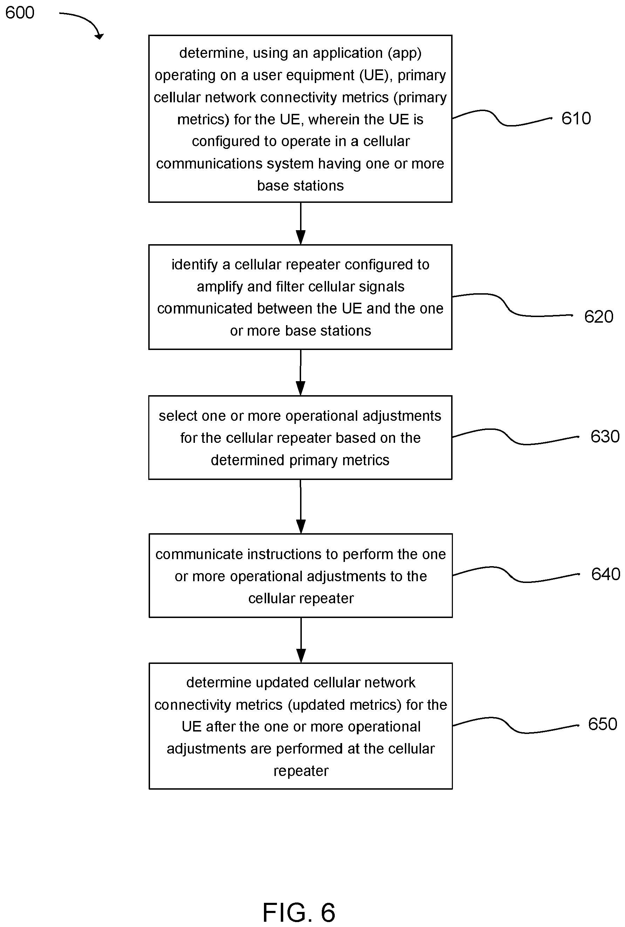

In accordance with one embodiment, a non-transitory machine readable storage medium having instructions embodied thereon is disclosed, as illustrated in the example of FIG. 6. The instructions, when executed by a processor, determine, using an application (app) operating on a user equipment (UE), primary cellular network connectivity metrics (primary metrics) for the UE, as shown in 610. The UE is configured to operate in a cellular communications system having one or more base stations. The instructions further identify a cellular repeater configured to amplify and filter cellular signals communicated between the UE and the one or more base stations, as shown in 620. The instructions select one or more operational adjustments for the cellular repeater based on the determined primary metrics, as shown in 630. Each primary metric may be associated with a selected base station based on an identifier, such as the base station's cell ID. The instructions communicate instructions to perform the one or more operational adjustments to the cellular repeater, as shown in 640. The instructions determine updated cellular network connectivity metrics (updated metrics) for the UE after the one or more operational adjustments are performed at the cellular repeater, as shown in 650. In one embodiment, the instructions can instruct the repeater system to maintain the one or more operational adjustments for the cellular repeater when the updated metrics are improved relative to the primary metrics.

The instructions can select one or more of the operational adjustments. The operational adjustments can comprise one or more of: a change in a gain of one or more amplification and filtering paths in the repeater for an uplink signal from the UE; a change in a gain of one or more amplification and filtering paths for a downlink signal for the UE; a change in an output power of the uplink signal of the UE in the one or more amplification and filtering paths in the repeater; a change in an output power of the downlink signal for the UE in the one or more amplification and filtering paths in the repeater; a change in a transmitted noise power of the uplink signal of the UE in the one or more amplification and filtering paths in the repeater; or a change in a transmitted noise power of the downlink signal for the UE in the one or more amplification and filtering paths in the repeater.

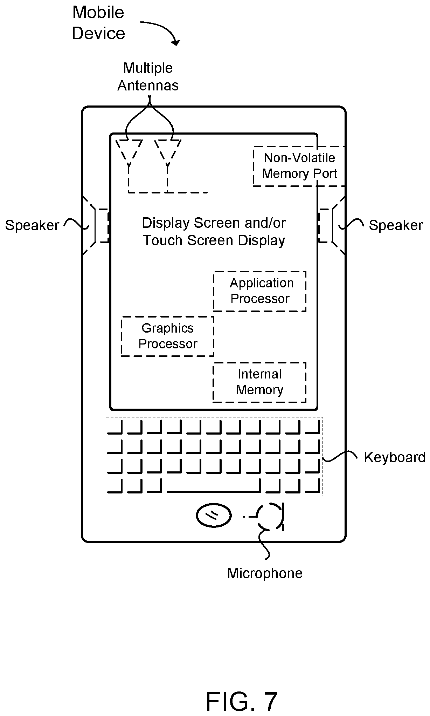

FIG. 7 provides an example illustration of the wireless device, such as a user equipment (UE), a mobile station (MS), a mobile communication device, a tablet, a handset, a wireless transceiver coupled to a processor, or other type of wireless device. The wireless device can include one or more antennas configured to communicate with a node or transmission station, such as an access point (AP), a base station (BS), an evolved Node B (eNB), a baseband unit (BBU), a remote radio head (RRH), a remote radio equipment (RRE), a relay station (RS), a radio equipment (RE), a remote radio unit (RRU), a central processing module (CPM), or other type of wireless wide area network (WWAN) access point. The wireless device can communicate using separate antennas for each wireless communication standard or shared antennas for multiple wireless communication standards. The wireless device can communicate in a wireless local area network (WLAN), a wireless personal area network (WPAN), and/or a WWAN.

FIG. 7 also provides an illustration of a microphone and one or more speakers that can be used for audio input and output from the wireless device. The display screen can be a liquid crystal display (LCD) screen, or other type of display screen such as an organic light emitting diode (OLED) display. The display screen can be configured as a touch screen. The touch screen can use capacitive, resistive, or another type of touch screen technology. An application processor and a graphics processor can be coupled to internal memory to provide processing and display capabilities. A non-volatile memory port can also be used to provide data input/output options to a user. The non-volatile memory port can also be used to expand the memory capabilities of the wireless device. A keyboard can be with the wireless device or wirelessly connected to the wireless device to provide additional user input. A virtual keyboard can also be provided using the touch screen.

Various techniques, or certain aspects or portions thereof, can take the form of program code (i.e., instructions) embodied in tangible media, such as floppy diskettes, compact disc-read-only memory (CD-ROMs), hard drives, non-transitory computer readable storage medium, or any other machine-readable storage medium wherein, when the program code is loaded into and executed by a machine, such as a computer, the machine becomes an apparatus for practicing the various techniques. Circuitry can include hardware, firmware, program code, executable code, computer instructions, and/or software. A non-transitory computer readable storage medium can be a computer readable storage medium that does not include signal. In the case of program code execution on programmable computers, the computing device can include a processor, a storage medium readable by the processor (including volatile and non-volatile memory and/or storage elements), at least one input device, and at least one output device. The volatile and non-volatile memory and/or storage elements can be a random-access memory (RAM), erasable programmable read only memory (EPROM), flash drive, optical drive, magnetic hard drive, solid state drive, or other medium for storing electronic data. The low energy fixed location node, wireless device, and location server can also include a transceiver module (i.e., transceiver), a counter module (i.e., counter), a processing module (i.e., processor), and/or a clock module (i.e., clock) or timer module (i.e., timer). One or more programs that can implement or utilize the various techniques described herein can use an application programming interface (API), reusable controls, and the like. Such programs can be implemented in a high level procedural or object oriented programming language to communicate with a computer system. However, the program(s) can be implemented in assembly or machine language, if desired. In any case, the language can be a compiled or interpreted language, and combined with hardware implementations.

As used herein, the term processor can include general purpose processors, specialized processors such as VLSI, FPGAs, or other types of specialized processors, as well as base band processors used in transceivers to send, receive, and process wireless communications.

It should be understood that many of the functional units described in this specification have been labeled as modules, in order to more particularly emphasize their implementation independence. For example, a module can be implemented as a hardware circuit comprising custom very-large-scale integration (VLSI) circuits or gate arrays, off-the-shelf semiconductors such as logic chips, transistors, or other discrete components. A module can also be implemented in programmable hardware devices such as field programmable gate arrays, programmable array logic, programmable logic devices or the like.

In one example, multiple hardware circuits or multiple processors can be used to implement the functional units described in this specification. For example, a first hardware circuit or a first processor can be used to perform processing operations and a second hardware circuit or a second processor (e.g., a transceiver or a baseband processor) can be used to communicate with other entities. The first hardware circuit and the second hardware circuit can be incorporated into a single hardware circuit, or alternatively, the first hardware circuit and the second hardware circuit can be separate hardware circuits.

Modules can also be implemented in software for execution by various types of processors. An identified module of executable code can, for instance, comprise one or more physical or logical blocks of computer instructions, which can, for instance, be organized as an object, procedure, or function. Nevertheless, the executables of an identified module need not be physically located together, but can comprise disparate instructions stored in different locations which, when joined logically together, comprise the module and achieve the stated purpose for the module.

Indeed, a module of executable code can be a single instruction, or many instructions, and can even be distributed over several different code segments, among different programs, and across several memory devices. Similarly, operational data can be identified and illustrated herein within modules, and can be embodied in any suitable form and organized within any suitable type of data structure. The operational data can be collected as a single data set, or can be distributed over different locations including over different storage devices, and can exist, at least partially, merely as electronic signals on a system or network. The modules can be passive or active, including agents operable to perform desired functions.

In a broad aspect, an embodiment provides a repeater system operable to adjust repeater system settings based on UE connectivity metrics in a cellular communication system, comprising:
a first antenna port configured to be coupled to a first antenna;
a second antenna port configured to be coupled to a second antenna;
one or more first direction amplification and filtering paths coupled between the first antenna port and the second antenna port;
one or more second direction amplification and filtering paths coupled between the first antenna port and the second antenna port;
a wireless network transceiver configured to:
   receive cellular network connectivity metrics (metrics) from a user equipment (UE) configured to use the repeater system; or
   receive instructions from an application (app) operating on the UE to perform operational adjustments at the repeater for the UE, in response to the metrics of the UE; or
a modem configured to receive the metrics or the instructions to perform the operational adjustments at the repeater system for the UE configured to use the repeater system; and
a controller coupled to one or more of:
   the one or more first direction amplification and filtering paths; or
   the one or more second direction amplification and filtering paths; and
   the wireless network transceiver or the modem;
the controller configured to perform the operational adjustments at the repeater system for the UE, in response to the metrics of the UE or in response to the received instructions.

In a subsidiary aspect, the metrics comprise one or more of:
a received signal strength indicator (RSSI) measurement;
a reference signal received power (RSRP) measurement;
a reference signal received quality (RSRQ) measurement;
a channel quality indicator (CQI) measurement;
a signal to noise ratio (SNR) measurement;
a signal to interference noise ratio (SINR) measurement;
an uplink data throughput measurement;
a downlink data throughput measurement;
a modulation and coding scheme (MCS) of the UE;
a rank indicator (RI) value of the UE;
a Pre-coding Matrix Indicator (PMI) of the UE;
a location of the UE at the time a selected metric is measured;
a distance between the UE and one of the first antenna and the second antenna at the time a selected metric is measured;
a time of day that a selected metric is measured;
a weather condition at the time that a selected metric is measured;
a dropped call history for the UE;
a location of the UE for each dropped call in the dropped call history;
an output power of the UE for an uplink signal transmitted by the UE;
a determination of one or more channels used for an uplink signal transmitted from the UE;
a determination of one or more channels used in a downlink signal to be received at the UE;
a determination of one or more bands used for an uplink signal transmitted from the UE;
a determination of one or more bands used in a downlink signal to be received at the UE;
a bandwidth part (BWP) for an uplink signal transmitted from the UE;
a bandwidth part (BWP) in a downlink signal to be received at the UE;
frequency hopping information for an uplink signal transmitted from the UE;
frequency hopping information for a downlink signal to be received at the UE;
downlink control information (DCI) for the UE;
uplink control information (UCI) for the UE;
network latency information; ; and
multiple input multiple output (MIMO) status for the UE;

In a further subsidiary aspect, the operational adjustments comprise one or more of:
a change in gain of one or more of the one or more first direction amplification and filtering paths for a first direction signal of the UE;
a change in gain of one or more of the one or more second direction amplification and filtering paths for a second direction signal for the UE;
a change in output power of the first direction signal of the UE; or
a change in output power of the second direction signal for the UE; or
a change in transmitted noise power of the first direction signal of the UE; or
a change in transmitted noise power of the second direction signal for the UE.

In a further subsidiary aspect, the metrics for a specific base station are associated with a cell identification (ID) of the base station.

In a further subsidiary aspect, the app is configured to record the metrics for the UE and communicate the metrics of the UE or send the instructions for the operational adjustments of the repeater system to the repeater system via the wireless network transceiver or the modem:
when the UE is within a communication distance of the repeater system and the wireless network transceiver;
at a selected time period;
when indicated by a user of the app;
when indicated by the repeater system; or
when the UE has a new operational adjustment for the repeater system.

In a further subsidiary aspect, the app is configured to record the metrics while the UE is used for one or more of voice communications with a base station and data communications with the base station.

In a further subsidiary aspect, the app is configured to actively record the metrics.

In a further subsidiary aspect, the app is configured to record the metrics while the UE is within a selected geographic distance from the repeater system.

In a further subsidiary aspect, the app is configured to record the metrics only while the UE is in communication with one or more selected base stations that are located within a range of the repeater system.

In a further subsidiary aspect, the app is configured to record the metrics for each base station in communication with the UE.

In a further subsidiary aspect, the app is configured to enable a user to select one or more base stations for which the app will proactively record one or more of the metrics and send either the one or more metrics or send the instructions for the operational adjustments to the repeater system based on the one or more metrics.

In a further subsidiary aspect, the controller is configured to perform the operational adjustments based on the one or more metrics or commands sent to the repeater system for the connectivity test at the UE.

In a further subsidiary aspect in accordance with any of the preceding aspects, the controller is configured to perform periodic operational adjustments based on one or more metrics or commands sent to the repeater system from the UE.

In a further subsidiary aspect in accordance with any of the preceding aspects, the controller is further configured to adjust or turn off one or more of the one or more first direction amplification and filtering paths, or one or more of the one or more second direction amplification and filtering paths based on one or more metrics or commands sent to the repeater system from the UE.

In a further subsidiary aspect in accordance with any of the preceding aspects, the controller is further configured to adjust or turn off one or more of the one or more first direction amplification and filtering paths based on one or more metrics or commands sent to the repeater system from the UE while maintaining the one or more second direction amplification and filtering paths to allow the UE to communicate in the second direction using carrier aggregation.

In a further subsidiary aspect in accordance with any of the preceding aspects, the controller is further configured to adjust or turn off one or more of the one or more first direction amplification and filtering paths based on a manual instruction of a user of the app.

In a further subsidiary aspect in accordance with any of the preceding aspects, the controller is further configured to:
adjust an automatic gain control (AGC) level of one or more of the first direction amplification and filtering paths or one or more of the second direction amplification and filtering paths in response to the metrics of the UE or in response to the received instructions to change the output power or the transmitted noise power; or
actively adjust a matching network relative to an impedance of an output of a power amplifier of one or more of the first direction amplification and filtering paths or one or more of the second direction amplification and filtering paths in response to the metrics of the UE or in response to the received instructions to change the output power or the transmitted noise power.

In a further subsidiary aspect in accordance with any of the preceding aspects, the app is configured to enable a user to configure the repeater system to maximize communication over a coverage area for the UE or communication capacity for the UE.

In a further subsidiary aspect in accordance with any of the preceding aspects, the app is configured to limit the change in gain, the change in output power, or the change in transmitted noise power based on governmental limitations for the repeater system.

In a further subsidiary aspect in accordance with any of the preceding aspects, the governmental limitations are comprised in federal communication commission (FCC) part 20 rules for the repeater system.

In a further subsidiary aspect in accordance with any of the preceding aspects, the app is configured to enable a user to select one of an optimized coverage or an optimized capacity and the app is configured to send the instructions to perform the operational adjustments at the repeater system based on the user selection.

In a further subsidiary aspect in accordance with any of the preceding aspects, the instructions to perform the operational adjustments at the repeater system for a selection of optimized coverage comprises setting amplifiers in a non-linear region for the change in gain of one or more of the one or more first direction amplification and filtering paths for a first direction signal or the change in gain of one or more of the one or more second direction amplification and filtering paths for a second direction signal.

In a further subsidiary aspect in accordance with any of the preceding aspects, the instructions to perform the operational adjustments at the repeater system for a selection of optimized capacity comprises setting amplifiers in a linear region for the change in gain of one or more of the one or more first direction amplification and filtering paths for a first direction signal or the change in gain of one or more of the one or more second direction amplification and filtering paths for a second direction signal.

In a further subsidiary aspect in accordance with any of the preceding aspects, the app is configured to identify the:
one or more channels selected by the cellular communication system for the uplink transmission from the UE of an uplink signal;
one or more channels selected by the cellular communication system for the downlink reception at the UE of a downlink signal;
one or more bands selected by the cellular communication system for the uplink transmission from the UE of an uplink signal; and
one or more bands selected by the cellular communication system for downlink reception at the UE of a downlink signal;
wherein the app is configured to adjust or turn off one or more of the amplification and transmission paths associated with the one or more channels selected for uplink transmission, the one or more channels selected for downlink reception, the one or more bands selected for uplink transmission, or the one or more bands selected for downlink reception to cause the cellular communication system to select different channels selected for uplink transmission, channels selected for downlink reception, bands selected for uplink transmission, or bands selected for downlink reception.

In a further subsidiary aspect in accordance with any of the preceding aspects, the controller or the app are configured to average selected metrics over time and the controller then performs the repeater operational adjustments based on the averaged metrics.

In a further subsidiary aspect in accordance with any of the preceding aspects, the app is configured to communicate one or more of the metrics for the UE or repeater metrics to a third party.

In a further subsidiary aspect in accordance with any of the preceding aspects, the controller is configured to perform the repeater operational adjustment based on the metrics or the received instructions for two or more UEs.

In a further subsidiary aspect in accordance with any of the preceding aspects, the controller is further configured to adjust a direction of one or more of the first antenna and the second antenna based on the metrics or the received instructions from the UE.

In a further subsidiary aspect in accordance with any of the preceding aspects, the controller is further configured to adjust a direction of one or more of the first antenna and the second antenna and determine a desired direction for the first antenna and the second direction based on a change in the metrics for the UE while the first antenna or the second antenna are moving.

In a further subsidiary aspect in accordance with any of the preceding aspects, the first antenna or the second antenna are configured to perform an initial scan in a pitch direction or an azimuth direction while receiving the metrics.

In a further subsidiary aspect in accordance with any of the preceding aspects, the first antenna or the second antenna are configured to perform a periodic scan in a pitch direction or an azimuth direction while receiving the metrics.

In a further subsidiary aspect in accordance with any of the preceding aspects, the controller is configured to mechanically adjust or to electrically steer the direction of the one or more of the first antenna and the second antenna and determine a desired direction for the first antenna and the second direction based on a change in the metrics for the UE while the first antenna or the second antenna are moving.

In a further subsidiary aspect in accordance with any of the preceding aspects, the app is configured to adjust a direction of one or more of the first antenna and the second antenna and determine a desired direction for the first antenna and the second direction based on a change in the metrics for the UE.

In a further broad aspect, an embodiment of the invention provides a non-transitory machine readable storage medium having instructions embodied thereon, the instructions, when executed by a processor:
determine, using an application (app) operating on a user equipment (UE), primary cellular network connectivity metrics (primary metrics) for the UE, wherein the UE is configured to operate in a cellular communications system having one or more base stations;
identify a cellular repeater configured to amplify and filter cellular signals communicated between the UE and the one or more base stations;
select one or more operational adjustments for the cellular repeater based on the determined primary metrics;
communicate instructions to perform the one or more operational adjustments to the cellular repeater; and
determine updated cellular network connectivity metrics (updated metrics) for the UE after the one or more operational adjustments are performed at the cellular repeater.

In a further subsidiary aspect in accordance with any of the preceding aspects, the instructions that, when executed by the processor, further maintain the one or more operational adjustments for the cellular repeater when the updated metrics are improved relative to the primary metrics.

In a further subsidiary aspect in accordance with any of the preceding aspects, the instructions that, when executed by the processor, further select one or more of the operational adjustments, the operational adjustments comprising:
change a gain of one or more amplification and filtering paths in the repeater for an uplink signal from the UE;
change a gain of one or more amplification and filtering paths for a downlink signal for the UE;
change an output power of the uplink signal of the UE in the one or more amplification and filtering paths in the repeater;
change an output power of the downlink signal for the UE in the one or more amplification and filtering paths in the repeater;
change a transmitted noise power of the uplink signal of the UE in the one or more amplification and filtering paths in the repeater; or
change a transmitted noise power of the downlink signal for the UE in the one or more amplification and filtering paths in the repeater.

In a further subsidiary aspect in accordance with any of the preceding aspects, the instructions that, when executed by the processor, further average selected primary metrics over time and communicate the one or more operational adjustments to the cellular repeater to be performed at the cellular repeater based on the averaged primary metrics.

In a further subsidiary aspect in accordance with any of the preceding aspects, the instructions that, when executed by the processor, further determine the primary metrics or the updated cellular network connectivity metrics from one or more of:
a received signal strength indicator (RSSI) measurement;
a reference signal received power (RSRP) measurement;
a reference signal received quality (RSRQ) measurement;
a channel quality indicator (CQI) measurement;
a signal to noise ratio (SNR) measurement;
a signal to interference noise ratio (SINR) measurement;
an uplink data throughput measurement;
a downlink data throughput measurement;
a modulation and coding scheme (MCS) of the UE;
a rank indicator (RI) value of the UE;
a Pre-coding Matrix Indicator (PMI) of the UE;
a location of the UE at the time a selected metric is measured;
a distance between the UE and one of the first antenna and the second antenna at the time a selected metric is measured;
a time of day that a selected metric is measured;
a weather condition at the time that a selected metric is measured;
a dropped call history for the UE;
a location of the UE for each dropped call in the dropped call history;
an output power of the UE for an uplink signal transmitted by the UE;
a determination of one or more channels used for an uplink signal transmitted from the UE;
a determination of one or more channels used in a downlink signal to be received at the UE;
a determination of one or more bands used for an uplink signal transmitted from the UE;
a determination of one or more bands used in a downlink signal to be received at the UE;
a bandwidth part (BWP) for an uplink signal transmitted from the UE;
a bandwidth part (BWP) in a downlink signal to be received at the UE;
frequency hopping information for an uplink signal transmitted from the UE;
frequency hopping information for a downlink signal to be received at the UE;
downlink control information (DCI) for the UE;
uplink control information (UCI) for the UE;
network latency information; or
multiple input multiple output (MIMO) status for the UE;

In a further subsidiary aspect in accordance with any of the preceding aspects, wherein the instructions that, when executed by the processor, further associate the primary metrics or the updated metrics from a specific base station with the specific base station based on a cell identification (ID) of the specific base station.

In a further subsidiary aspect in accordance with any of the preceding aspects, wherein the instructions that, when executed by the processor, further record the primary metrics or the updated metrics while the UE is used for one or more of voice communications with a base station and data communications with the base station.

In a further subsidiary aspect in accordance with any of the preceding aspects, wherein the instructions that, when executed by the processor, further record the primary metrics or the updated metrics while the UE is within a selected geographic distance from the cellular repeater.

In a further subsidiary aspect in accordance with any of the preceding aspects, wherein the instructions that, when executed by the processor, further record the primary metrics or the updated metrics only while the UE is in communication with one or more selected base stations of the one or more base stations that are located within a range of the cellular repeater.

In a further subsidiary aspect in accordance with any of the preceding aspects, wherein the instructions that, when executed by the processor, further enable a user to select one or more base stations of the one or more base stations for which the app will proactively record one or more of the metrics and send either the one or more metrics or send the instructions for the operational adjustments to the cellular repeater based on the one or more metrics.

In a further subsidiary aspect in accordance with any of the preceding aspects, wherein the instructions that, when executed by the processor, further send instructions to the cellular repeater to perform periodic operational adjustments based on the updated metrics.

In a further subsidiary aspect in accordance with any of the preceding aspects, wherein the instructions that, when executed by the processor, further send instructions to the cellular repeater to adjust or turn off one or more of the one or more first direction amplification and filtering paths, or one or more of the one or more second direction amplification and filtering paths to cause the cellular communications system to select a different uplink channel or downlink channel or uplink band or downlink band for communication between the UE and the one or more base stations.

In a further subsidiary aspect in accordance with any of the preceding aspects, wherein the instructions that, when executed by the processor, further send instructions to the cellular repeater to adjust or turn off one or more of the one or more first direction amplification and filtering paths based on the instructions for one or more operational adjustments sent to the cellular repeater from the UE while maintaining the one or more second direction amplification and filtering paths to allow the UE to communicate via the cellular repeater in the second direction using carrier aggregation.

In a further subsidiary aspect in accordance with any of the preceding aspects, wherein the instructions that, when executed by the processor, further send instructions to the cellular repeater to adjust or turn off one or more of the one or more first direction amplification and filtering paths based on a manual instruction of a user of the app.

In a further subsidiary aspect in accordance with any of the preceding aspects, wherein the instructions that, when executed by the processor, further send instructions to the cellular repeater to:
adjust an automatic gain control (AGC) level of one or more of the first direction amplification and filtering paths or one or more of the second direction amplification and filtering paths in response to the primary metrics or updated metrics of the UE; or
actively adjust a matching network relative to an impedance of an output of a power amplifier of one or more of the first direction amplification and filtering paths or one or more of the second direction amplification and filtering paths in response to the primary metrics or updated metrics of the UE.

In a further subsidiary aspect in accordance with any of the preceding aspects, wherein the instructions that, when executed by the processor, further enable a selection by a user to configure the cellular repeater to: maximize communication over a coverage area for the UE or maximize communication capacity for the UE.

In a further subsidiary aspect in accordance with any of the preceding aspects, wherein the instructions that, when executed by the processor, further limit the change in gain, the change in output power, or the change in transmitted noise power based on governmental limitations for the repeater system.

In a further subsidiary aspect in accordance with any of the preceding aspects, wherein the governmental limitations are comprised in federal communication commission (FCC) part 20 rules for the repeater system.

In a further subsidiary aspect in accordance with any of the preceding aspects, wherein the instructions that, when executed by the processor, further enable a user to select one of an optimized coverage or an optimized capacity and the app is configured to send the instructions to perform the operational adjustments at the repeater system based on the user selection.

In a further subsidiary aspect in accordance with any of the preceding aspects, wherein the instructions that, when executed by the processor, further comprises sending the instructions to perform the operational adjustments at the cellular repeater, for the selection of optimized coverage, comprises:
setting amplifiers in a non-linear region for the change in gain of one or more of the one or more first direction amplification and filtering paths for a first direction signal or the change in gain of one or more of the one or more second direction amplification and filtering paths for a second direction signal.

In a further subsidiary aspect in accordance with any of the preceding aspects, wherein the instructions that, when executed by the processor, further comprises sending the instructions to perform the operational adjustments at the cellular repeater, for the selection of optimized capacity, comprises setting amplifiers in a linear region for the change in gain of one or more of the one or more first direction amplification and filtering paths for a first direction signal or the change in gain of one or more of the one or more second direction amplification and filtering paths for a second direction signal.

In a further subsidiary aspect in accordance with any of the preceding aspects wherein the instructions that, when executed by the processor, are further configured to identify the:
one or more channels selected by the cellular communication system for the uplink transmission from the UE of an uplink signal;
one or more channels selected by the cellular communication system for the downlink reception at the UE of a downlink signal;
one or more bands selected by the cellular communication system for the uplink transmission from the UE of an uplink signal; and
one or more bands selected by the cellular communication system for downlink reception at the UE of a downlink signal;
wherein the app is configured to adjust or turn off one or more of the amplification and transmission paths associated with the one or more channels selected for uplink transmission, the one or more channels selected for downlink reception, the one or more bands selected for uplink transmission, or the one or more bands selected for downlink reception to cause the cellular communication system to select different channels selected for uplink transmission, channels selected for downlink reception, bands selected for uplink transmission, or bands selected for downlink reception.

In a further subsidiary aspect in accordance with any of the preceding aspects, wherein the instructions that, when executed by the processor, are further configured to communicate one or more of the metrics for the UE or repeater metrics to a third party.

In a further subsidiary aspect in accordance with any of the preceding aspects, wherein the instructions that, when executed by the processor, are further configured to adjust a direction of one or more of the first antenna and the second antenna and determine a desired direction for the first antenna and the second direction based on a between the primary metrics and the updated metrics for the UE.

Reference throughout this specification to "an example" or "exemplary" means that a particular feature, structure, or characteristic described in connection with the example is included in at least one embodiment of the present invention. Thus, appearances of the phrases "in an example" or the word "exemplary" in various places throughout this specification are not necessarily all referring to the same embodiment.

As used herein, a plurality of items, structural elements, compositional elements, and/or materials can be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention can be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics can be combined in any suitable manner in one or more embodiments. In the following description, numerous specific details are provided, such as examples of layouts, distances, network examples, etc., to provide a thorough understanding of embodiments of the invention. One skilled in the relevant art will recognize, however, that the invention can be practiced without one or more of the specific details, or with other methods, components, layouts, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

## Claims

1. A non-transitory machine readable storage medium having instructions embodied thereon, the instructions, when executed by a processor:
determine, using an application (app) operating on a user equipment (UE), primary cellular network connectivity metrics (primary metrics) for the UE, wherein the UE is configured to operate in a cellular communications system having one or more base stations;
identify a cellular repeater configured to amplify and filter cellular signals communicated between the UE and the one or more base stations;
select one or more operational adjustments for the cellular repeater based on the determined primary metrics;
communicate instructions to perform the one or more operational adjustments to the cellular repeater; and
determine updated cellular network connectivity metrics (updated metrics) for the UE after the one or more operational adjustments are performed at the cellular repeater.

2. The non-transitory machine readable storage medium as in claim 1, wherein the instructions that, when executed by the processor, further maintain the one or more operational adjustments for the cellular repeater when the updated metrics are improved relative to the primary metrics.

3. The non-transitory machine readable storage medium as in either claim 1 or claim 2, wherein the instructions that, when executed by the processor, further select one or more of the operational adjustments, the operational adjustments comprising:
change a gain of one or more amplification and filtering paths in the repeater for an uplink signal from the UE;
change a gain of one or more amplification and filtering paths for a downlink signal for the UE;
change an output power of the uplink signal of the UE in the one or more amplification and filtering paths in the repeater;
change an output power of the downlink signal for the UE in the one or more amplification and filtering paths in the repeater;
change a transmitted noise power of the uplink signal of the UE in the one or more amplification and filtering paths in the repeater; or
change a transmitted noise power of the downlink signal for the UE in the one or more amplification and filtering paths in the repeater.

4. The non-transitory machine readable storage medium as in any of the preceding claims, wherein the instructions that, when executed by the processor, further average selected primary metrics over time and communicate the one or more operational adjustments to the cellular repeater to be performed at the cellular repeater based on the averaged primary metrics.

5. The non-transitory machine readable storage medium as in any of the preceding claims, wherein the instructions that, when executed by the processor, further determine the primary metrics or the updated cellular network connectivity metrics from one or more of:
a received signal strength indicator (RSSI) measurement;
a reference signal received power (RSRP) measurement;
a reference signal received quality (RSRQ) measurement;
a channel quality indicator (CQI) measurement;
a signal to noise ratio (SNR) measurement;
a signal to interference noise ratio (SINR) measurement;
an uplink data throughput measurement;
a downlink data throughput measurement;
a modulation and coding scheme (MCS) of the UE;
a rank indicator (RI) value of the UE;
a Pre-coding Matrix Indicator (PMI) of the UE;
a location of the UE at the time a selected metric is measured;
a distance between the UE and one of the first antenna and the second antenna at the time a selected metric is measured;
a time of day that a selected metric is measured;
a weather condition at the time that a selected metric is measured;
a dropped call history for the UE;
a location of the UE for each dropped call in the dropped call history;
an output power of the UE for an uplink signal transmitted by the UE;
a determination of one or more channels used for an uplink signal transmitted from the UE;
a determination of one or more channels used in a downlink signal to be received at the UE;
a determination of one or more bands used for an uplink signal transmitted from the UE;
a determination of one or more bands used in a downlink signal to be received at the UE;
a bandwidth part (BWP) for an uplink signal transmitted from the UE;
a bandwidth part (BWP) in a downlink signal to be received at the UE;
frequency hopping information for an uplink signal transmitted from the UE;
frequency hopping information for a downlink signal to be received at the UE;
downlink control information (DCI) for the UE;
uplink control information (UCI) for the UE;
network latency information; or
multiple input multiple output (MIMO) status for the UE;

6. The non-transitory machine readable storage medium as in any of the preceding claims, wherein the instructions that, when executed by the processor, further record the primary metrics or the updated metrics while the UE is used for one or more of voice communications with a base station and data communications with the base station.

7. The non-transitory machine readable storage medium as in any of the preceding claims, wherein the instructions that, when executed by the processor, further record the primary metrics or the updated metrics while the UE is within a selected geographic distance from the cellular repeater.

8. The non-transitory machine readable storage medium as in any of the preceding claims, wherein the instructions that, when executed by the processor, further record the primary metrics or the updated metrics only while the UE is in communication with one or more selected base stations of the one or more base stations that are located within a range of the cellular repeater.

9. The non-transitory machine readable storage medium as in any of the preceding claims, wherein the instructions that, when executed by the processor, further send instructions to the cellular repeater to perform periodic operational adjustments based on the updated metrics.

10. The non-transitory machine readable storage medium as in any of the preceding claims, wherein the instructions that, when executed by the processor, further send instructions to the cellular repeater to adjust or turn off one or more of the one or more first direction amplification and filtering paths, or one or more of the one or more second direction amplification and filtering paths to cause the cellular communications system to select a different uplink channel or downlink channel or uplink band or downlink band for communication between the UE and the one or more base stations.

11. The non-transitory machine readable storage medium as in any of the preceding claims, wherein the instructions that, when executed by the processor, further send instructions to the cellular repeater to adjust or turn off one or more of the one or more first direction amplification and filtering paths based on the instructions for one or more operational adjustments sent to the cellular repeater from the UE while maintaining the one or more second direction amplification and filtering paths to allow the UE to communicate via the cellular repeater in the second direction using carrier aggregation.

12. The non-transitory machine readable storage medium as in any of the preceding claims, wherein the instructions that, when executed by the processor, further send instructions to the cellular repeater to adjust or turn off one or more of the one or more first direction amplification and filtering paths based on a manual instruction of a user of the app.

13. The non-transitory machine readable storage medium as in any of the preceding claims, wherein the instructions that, when executed by the processor, further enable a selection by a user to configure the cellular repeater to: maximize communication over a coverage area for the UE or maximize communication capacity for the UE.

14. The non-transitory machine readable storage medium as in any of the preceding claims, wherein the instructions that, when executed by the processor, further limit the change in gain, the change in output power, or the change in transmitted noise power based on governmental limitations for the repeater system.

15. The non-transitory machine readable storage medium as in any of the preceding claims, wherein the instructions that, when executed by the processor, further enable a user to select one of an optimized coverage or an optimized capacity and the app is configured to send the instructions to perform the operational adjustments at the repeater system based on the user selection.
